# EUROPEAN PATENT SPECIFICATION

(11) **EP 0 441 936 B1**
(45) Date of publication and mention of the grant of the patent: **11.12.1996**
(21) Application number: 90913296.1
(22) Date of filing: 06.09.1990
(51) Int. Cl.: H04B 15/00

(54) **NOISE SUPPRESSION CIRCUITS**
LÄRMBESEITIGUNGSSCHALTUNG
CIRCUITS ELIMINATEURS DE BRUIT

(30) Priority: 06.09.1989 AU 6196/89
(43) Date of publication of application: 21.08.1991
(73) Proprietor: COCHLEAR PTY. LTD., Lane Cove, NSW 2066 (AU)
(72) Inventor: SELIGMAN, Peter, Misha, Essendon, VIC 3040 (AU)
(74) Representative: Wharton, Peter Robert
(86) International application number: AU9000404
(87) International publication number: WO9103890

(56) References cited:
- EP-A- 0 326 905
- EP-A- 0 343 792
- US-A- 3 816 762
- US-A- 4 025 721
- US-A- 4 284 856
- US-A- 4 405 831
- US-A- 4 461 025
- US-A- 4 630 304
- US-A- 4 839 608
- THE BELL SYSTEM TECHNICAL JOURNAL vol. 60, no. 8, October 1981, NEW YORK, US pages 1847 - 1859; SONDHI ET AL.: 'Improving the quality of a noisy speech signal'& JP-A-58 206 238
- PATENT ABSTRACTS OF JAPAN vol. 8, no. 053 (E-231)9 March 1984

## Description

### Technical Field

This invention relates to the suppression of noise in signal transmissions and, more particularly, to the suppression of background noise in order to separate speech and speech-like signals from the background noise in an audio signal.

### Background of the Invention

Various types of background noise accompany speech in audio-communications systems that are designed primarily to transmit speech. Such types of background noise include, among others, the sounds from air conditioning systems, motors, other mechanical devices, background voices in a crowd and the hiss of white noise. All of these different types of noise exhibit certain temporal properties which distinguish them significantly from the sound made by a single talker.

A number of common noise suppression systems have heretofore been developed, such as: Squelch systems, in which the primary purpose is to remove channel noise from a weak or non-existent radio frequency (RF) carrier; expansion/compression systems, such as the DBX (Registered Trade Mark) and the Dolby (Registered Trade Mark) expander/compressor; and, noise pulse eliminator circuits of various designs.

In the case of conventional RF squelch systems, examples of which may be seen in the U.S. Patents Nos. 3,660,765 (Glasser et al.), 4,038,604 (Koeber) and 4,158,174 (Gruenberger et al.), it is usual to either manually or automatically set a threshold such that when useful information is present in the derived audio channel, a gate is closed to transfer the information to an output line; on the other hand, in the presence of a poor signal-to-noise condition, the gate opens and "squelches" the output signal. Such conventional squelch systems operate to determine that the RF signal being received has a high signal-to-noise ratio, but do not examine the content of the RF signal to determine if the content of the signal is speech or background noise. The present invention, on the other hand, determines what the content of the derived audio signal is and suppresses the background noise while retaining the speech signal.

In the case of expander/compressor systems, such as the DBX (Registered Trade Mark) or the Dolby (Registered Trade Mark) systems, emphasis is placed on examining and adjusting relative amplitudes of the different constituents of the audio signals, the ultimate goal being the decrease in background noise. No distinction is made in such systems between sustained sounds, such as a lengthy drum roll, and transient sounds, such as a spoken phrase. Instead, distinctions are made on the basis of relative intensities occurring within the resultant complex waveforms. The present invention, on the other hand, is specifically directed to distinguishing between sustained and non-sustained qualities of sounds so that a drum roll would be defined as a noise while a spoken phrase would be classified as a desired signal.

In noise pulse eliminator arrangements of the prior art, there is an attempt to examine the statistics of given wave forms, whether they be related to RF transmission systems or recording systems. However, the nature of the analysis performed in noise pulse eliminators differs greatly from the nature of the analysis performed in the present invention. While noise burst eliminators are designed to delete rapid burst-type signals, the present invention is designed to eliminate long sustained sounds. Of necessity, the difference in emphasis results in differences in methods and apparatus employed to achieve the desired results.

In yet another type of prior art noise suppression system, a variation of the conventional RF squelch system is utilized in which the audio signal is analyzed and a distinction is made between sustained and non-sustained qualities of sound in a speech communication system. In this type of noise suppression system, exemplified by U.S. Patent No. 4,461,025 (Franklin), the audio signal, containing both background noise and speech information, is integrated during 20-100 millisecond periods to obtain short power spectra having distinct energy time intervals therein. The power spectra derived during the time that speech information appears in the audio signal include zero, or near zero, energy intervals, while the power spectra obtained when only background noise appears in the audio signal include few, if any, such zero energy levels. This distinction is utilized to generate a control signal that is only present when a speech component is present in the audio signal. This control signal is applied to a signal multiplier, which receives the audio signal as its second input signal.

The multiplier output signal is zero in the absence of signal energy from either of its two input signals. Accordingly, there is no multiplier output during the time that only background noise appears in the audio signal. On the other hand, the audio signal, including its background noise is amplified (multiplied) during the time that speech information appears therein.

US patent number 4,630,304 and an article in The Bell System Technical Journal, by Sondhi et al, Vol. 60, No. 8, October 1981 (pages 1847-1859) entitled "Improving the Quality of a Noisy Speech Signal", both describe noise estimators which work on the principle of detecting energy valleys to estimate noise. The Sondhi paper further describes how the noise estimator is used to adjust the channel gains in a vocoder.

The present invention distinguishes over those described above, and in particular over the disclosure in US patent number 4,630,304 in that the background noise portion of the audio signal is removed in the case of the present invention, rather than being amplified along with the speech portion of the signal.

From the foregoing, it will be appreciated that the present invention is intended to suppress background noise in signal transmissions systems, particularly in those systems wherein speech parameters, for example the amplitudes of various parts of the speech signal, are extracted and then later reconstituted in some way, as for instance in cochlear implants, vocoders, speech recognizers and speech transmission data rate reduction systems. For the sake of convenience, the invention will be described herein in relation to the suppression of noise in a speech communication system utilized in a cochlear implant for the profoundly deaf; however, it is to be understood that the invention is not limited thereto, as it may be applied to other signal transmission systems and other devices.

In many people who are profoundly deaf, the reason for deafness is the absence of, or the destruction of, the hair cells in the cochlea, which hair cells transduce acoustic signals into nerve impulses. These people are thus unable to derive any benefit from conventional hearing aid systems, no matter how loud the acoustic stimulus is made, because it is not possible for nerve impulses to be generated from sound in the normal manner.

Cochlear implant systems seek to bypass these hair cells by presenting electrical stimulation to the auditory nerve fibres directly, leading to the perception of sound in the brain. There have been many ways described in the past for achieving this object. One of the more effective of these is the system shown and described in US patent number 4,532,930 to Crosby et al, entitled "Cochlear Implant System For An Auditory Prosthesis."

The Crosby et al patent described a cochlear implant system in which an electrode array comprising multiple platinum ring electrodes in a silastic carrier is implanted in the cochlea of the ear. The electrode array is connected to a multichannel receiver-stimulator unit, containing a semiconductor integrated circuit and other components, which is implanted in the patient adjacent the ear. The receiver-stimulator unit receives data information and power through a tuned coil via an inductive link with a patient-wearable external speech processor. The speech processor includes an integrated circuit and various components which are configured or mapped to emit data signals from an Erasable Programmable Read Only Memory (EPROM). The EPROM is programmed to suit each patient's electrical stimulation perceptions which are determined through testing of the patient and the implanted stimulator/electrode. The testing is performed using a diagnostic and programming unit that is connected to the speech processor by an interface unit. The system allows use of various speech processing strategies, including dominant spectral peak and amplitude and compression of voice pitch, so as to include voiced sounds, unvoiced glottal sounds and prosodic information. The speech processing strategy employed is based on known psychophysical phenomena, and is customized to each individual patient by the use of the diagnostic and programming unit. Bi-phasic pulses are supplied to various combinations of electrodes by a switch controlled current sink in various modes of operation. Transmission of data is by a series of discrete data bursts which represent the chosen electrode(s), the electrode mode configuration, the stimulating current, and amplitude determined by the duration of the amplitude burst.

A problem which recipients of cochlear implants frequently have is that background noise causes irritating and unnecessary stimulation. The implant patient who has impaired sound processing capability is unable, like a normal listener, to filter out easily or ignore such stimulations from background noise.

In the past, attempts have been made to solve the problem by using activated switches which turn on the speech processor when there is an increase in signal level and then turn off the processor when the signal level drops. However, this has the effect that some initial sounds are lost. In addition, the abrupt switching on and off of the signal is distracting or irritating to the implant recipient. Also, the residual noise in the composite audio signal is presented to the implant recipient along with the speech information therein.

### Disclosure of the Invention

According to one aspect of the invention there is provided a system for suppressing residual noise in the processing of an input signal representing the energy of two signal components being a slowly varying residual noise level component and a rapidly varying data component, characterised in that said system comprises:-
first means including a circuit having input and output portions for respectively receiving said input signal and outputting said data component thereof;
second means coupled to said input portion of said first means for adding to said input signal a slowly varying negative/positive signal to substantially eliminate said residual noise level component from said input signal and provide an output signal corresponding essentially to the energy of said rapidly varying data component of said input signal;
third means for sensing said output signal; and,
fourth means responsive to the sensing of a negative/positive value in said output signal for rapidly adding a positive/negative signal to the signal being processed in order to prevent said output signal from going further negative/positive.

According to another aspect of the invention there is provided a method of suppressing residual noise in the processing of an input signal representing the energy of two signal components being a slowly varying residual noise level component and a rapidly varying data component, comprising the steps of:
adding to said input signal a slowly varying negative/positive signal to substantially eliminate said residual noise level component from said input signal and provide an output signal corresponding essentially to the energy of the rapidly varying data component of said input signal;
sensing said output signal; and,
adding a rapidly varying positive/negative signal to the signal being processed, when a negative/positive output signal is sensed, in order to prevent said output signal from going further negative/positive.

### Brief Description of the Drawings

Further objects, features and advantages of the invention will become apparent upon consideration of the following detailed description in conjunction with the drawings, in which:
Figure 1 is a circuit diagram of a noise suppression system according to one embodiment of the invention;
Figure 2 is a graph showing input signal level plotted against time for the circuits shown in Figure 1;
Figure 3 is a graph showing capacitor voltage plotted against time for the circuits shown in Figure 1;
Figure 4 is a graph showing output signal level plotted against time for the circuits shown in Figure 1;
Figure 5 is a circuit diagram of a noise suppression system according to a second embodiment of the invention; and
Figure 6 is a flow diagram of a digital implementation of a noise suppression system in accordance with another embodiment of this invention.

### Best Mode for Carrying Out the Invention

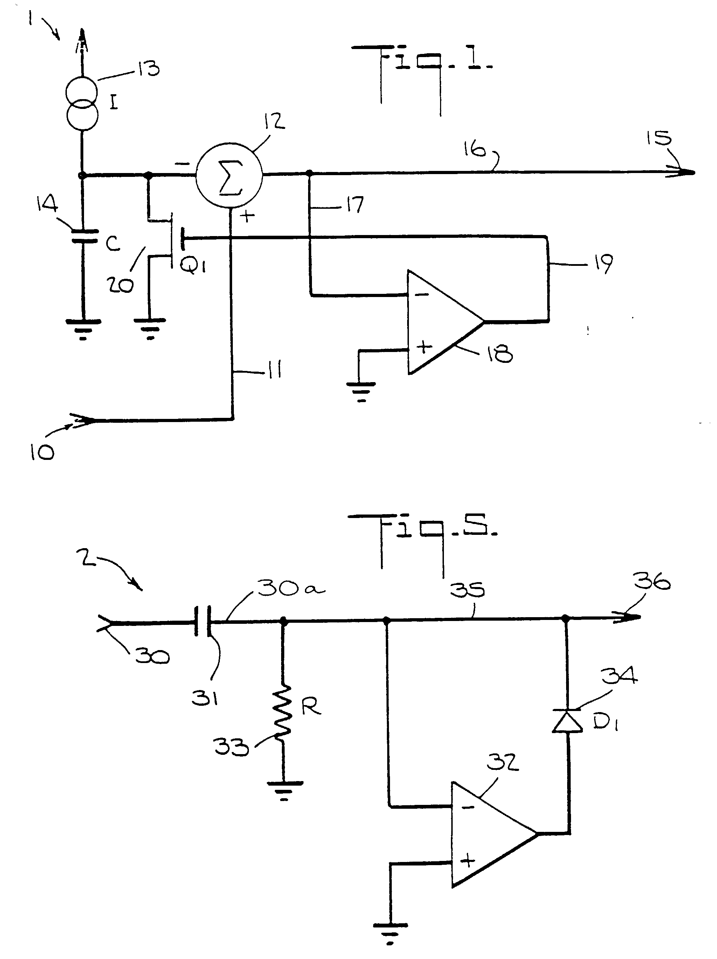

Referring now to Figure 1, a noise suppression system in accordance with one embodiment of this invention has been illustrated generally at 1. An input signal, shown generally 10, is applied to system 1 via a conductor 11. The input signal 10 comprises a signal having both a slowly varying residual noise level component and a rapidly varying data component therein. Input signal 10 may comprise, for example, a rectified audio signal developed in the aforesaid Crosby et al patent number 4,532,930.

The input signal 10 is connected as one input to a subtraction device 12, for example a summing amplifier. A capacitor 14, which is slowly charged by a current source 13 serially connected therewith, provides a second voltage input to the subtraction device 12, and the difference between the two inputs is provided as an output signal level parameter 15 on line 16.

Line 16 is connected through line 17 to one input terminal of a comparator 18, for example an operational amplifier, another input terminal of which is connected to ground. Comparator 18 serves to sense when the output signal 15 tries to go negative. The output of comparator 18 is applied through line 19 to the gate of a field effect transistor 20, the source and drain terminals of which are connected across capacitor 14. Accordingly, if the output signal level parameter 15 starts to go negative, the field effect transistor 20 operates to discharge capacitor 14 until the output signal level parameter 15 is again positive.

In operation, if a constant background noise is present in the input signal 10, the capacitor 14 will charge to the background noise level, and its voltage will be subtracted from the input signal 10 to provide the output signal level parameter 15. In effect, the current source 13, capacitor 14 and subtraction device 12 comprise a means that is coupled to the input portion of the noise suppression system 1 for adding to the input signal 10 a slowly varying negative signal in order to substantially eliminate the residual noise level component from the input signal and provide an output signal 15 corresponding essentially to the rapidly varying data component of the input signal. Similarly, the comparator 18 serves as a means for sensing the output signal level parameter, and the field effect transistor 20 serves as a means responsive to the sensing of a negative value in the output signal level parameter for rapidly adding a positive signal to the signal being processed in order to prevent the output signal from going further negative.

Referring now to Figure 2, which is a graph showing input signal level plotted against time for the circuits shown in Figure 1, the parameter representing input signal level, expressed in terms of signal energy, envelope, mean value, or other measure of signal level, rather than the signal itself, rises and falls as speech is received. Between the words 40 and 41, the parameter does not drop to zero, but drops to a plateau 42 which represents the residual noise level or noise floor. Similarly, between words 41 and 43, the parameter drops to the noise floor 44. The speech signal energy varies rapidly over tens or hundreds of milliseconds whereas the background noise, which for example may be due to a fan, an air conditioner or a car, varies more slowly over a period of tens of seconds. The noise suppression system of Figure 1 removes the slowly varying noise energy from the signal level parameter and preserves the more rapidly varying signal component.

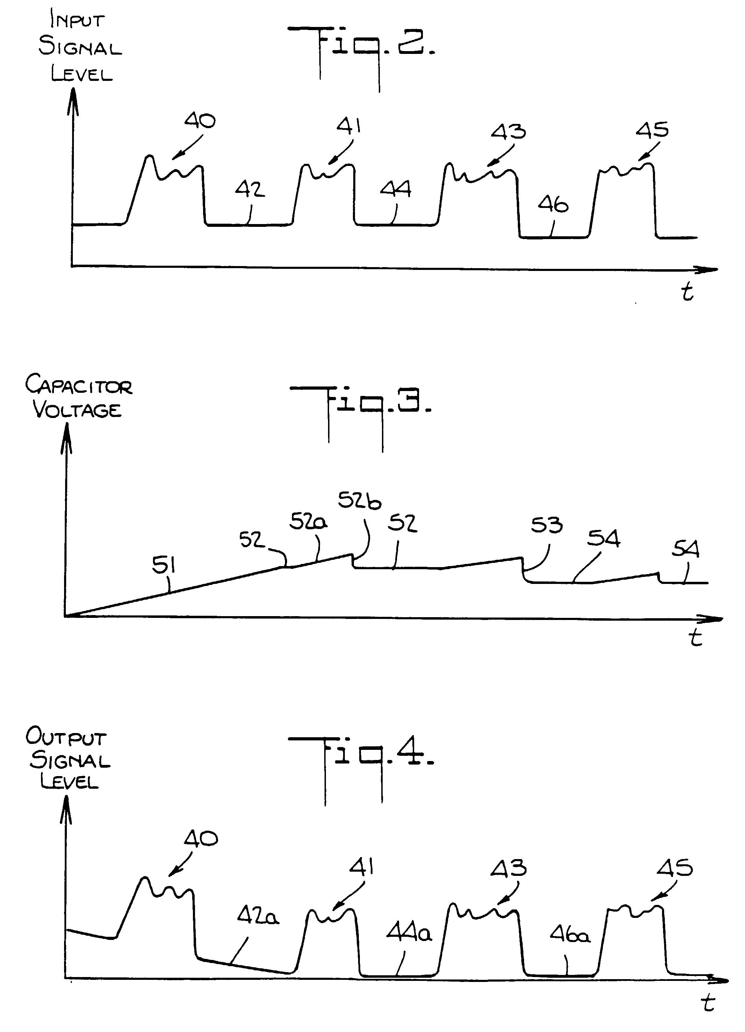

Referring now to Figure 3 in conjunction with Figures 1, 2 and 4, it will be seen that, following start-up, the voltage charge on capacitor 14 slowly increases with time, as indicated at 51. This charge voltage is subtracted from the input signal 10 until the noise floor represented by the plateau 42 (Figure 2) is effectively removed, as shown at 42a in Figure 4. Thereafter, the voltage charge on capacitor 14 remains essentially constant, as shown at 52 in Figure 3, rising slightly during words, as shown at 52a in the case of word 41, and dropping back at the end of the words, as shown at 52b, and the noise floor remains at essentially a zero level, as shown at 44a in Figure 4, until a change in the residual noise level of the input signal 10 occurs. By removing the noise level, the patient receives little or no stimulation when the speech portion of the signal stops.

If the residual noise level of the input signal 10 should fall, as shown at 46 in Figure 2, for example due to the turning off of a fan or the like, such a fall in the noise level floor would tend to have the effect of forcing the output signal level 15 to go negative. This, in turn, would cause the field effect transistor 20 to discharge a portion of the voltage on capacitor 14, as shown at 53 of Figure 3, so that a new, essentially constant, lower voltage charge appears on capacitor 14, as shown at 54. The new lower constant voltage corresponds to the new noise floor plateau 46 (Figure 2) resulting from the change in the residual noise level, and the corresponding output signal level floor returns to essentially zero level, as shown at 46a in Figure 4. Thus, the noise suppression system 1 adapts to the reduction of the residual noise level and adjusts the minimum signal level output (noise floor plateau 46) to the patient's threshold, rather than providing above threshold stimulation.

The time constant for charging capacitor 14 is preferably between 2 seconds and 10 seconds. The effect of using a short time constant, for example about 2 seconds, is that background noise is rapidly removed. However, sustained signals will also be removed. A longer time constant, for example about 10 seconds, will take longer to remove background noises.

However, such longer time constant will not affect sustained signals as much. As will appear in greater detail hereinafter, when the system of Figure 1 is used in a cochlear implant system employing multiple electrodes each provided with an output signal from a different frequency band portion of the input signal, it is preferable to use short time constants for the high frequency band portions, which in speech are transient in nature, and use longer time constants for the lower frequency band portions, where the sounds are more sustained. The 2 second to 10 second range of time constants referred to above is not to be taken as absolute, since time constants outside this range will also work to varying degrees.

Referring now to Figure 5, an alternate embodiment of a noise suppression system according to the invention, employing a precision diode network, has there been illustrated generally at 2. In this embodiment the input signal 30 is AC coupled through a capacitor 31 to one input of an operational amplifier 32, the other input of which is connected to ground. The output of capacitor 31 is also connected to one side of a resistor 33, the other side of which is connected to ground. The output of the operational amplifier 32 is connected through a diode 34 to the output line 35 of the noise suppression system 2, and the output signal level parameter 36 appears at the downstream end of output line 35 during operation of the system.

Resistor 33 serves to slowly and continuously drop the positive output level of the system, in order to bring the residual noise level floor to essentially zero. It thus corresponds to the function of the current source 13 and capacitor 14 of the Figure 1 embodiment. On the other hand, the operational amplifier 32 and diode 34, together, serve to clamp the output if the output signal level parameter 36 tries to drop below zero. In the event that the output signal level 36 does try to drop below zero, the capacitor 31 is quickly charged by amplifier 32 and diode 34 to restore the signal output level parameter to a positive value. Amplifier 32 and diode 34 thus correspond in function to comparator 18 and field effect transistor 20 of Figure 1 in this regard.

It should be noted that the circuits of the noise suppression systems of Figures 1 and 5 are operating on a slowly changing parameter representing the signal level, expressed in terms of its energy, envelope or mean value, or other measure of signal level, rather than the signal itself. The systems operate equally well regardless of the measure of the signal level that is employed. The system is useful in cases where the signal is analyzed into its components of level and frequency (or frequency band) and is then reconstructed, such as the case, for example, in vocoders, some speech processing hearing aids and cochlear implants. In the case of cochlear implants, as indicated earlier, the signal is analyzed into its parameters and presented to the patient in the form of electrical stimulation. Also, as indicated earlier the noise suppression system is applied to a number of frequency bands independently in the case of cochlear implants, so that if the noise spectrum is not uniform, the different noise plateaus at the different frequencies can still be correctly subtracted.

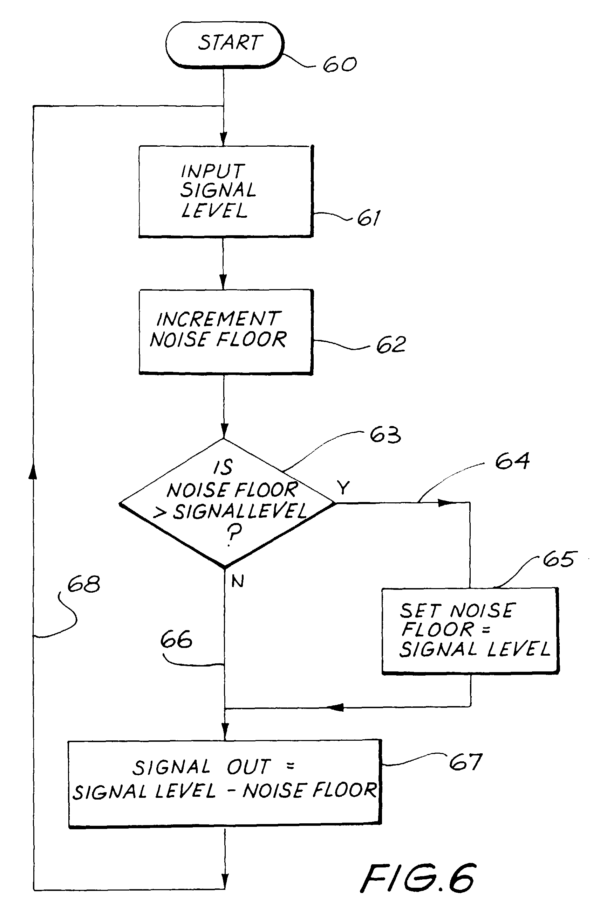

Referring now to Figure 6, a flow chart representing a digital embodiment of a noise suppression system in accordance with the invention has there been illustrated generally at 3. The starting point of the flow chart is shown at 60. It represents a conventional initialization step during which an associated microprocessor (not shown) is initialized when the system is started up. After initialization, the noise suppression algorithm would direct the system to sample the composite input signal level, as shown at 61. It would then increment the noise floor level, as shown at 62, and make a determination as to whether the noise floor level is greater than the composite signal input level, as shown at 63. If the noise floor level is greater than the signal level, as shown at 64, the noise floor level wold be reduced to equal the signal level, as shown at 65. Upon reduction of the noise floor level to equal the signal level, as shown at 65, or if the determination made at 63 is that the noise floor level is not greater than the signal level, as shown at 66, an output signal is generated, as shown at 67, which is equal to the composite input signal level minus the noise floor level signal. The algorithm then loops back, as shown at 68, to again sample the composite input signal level, as shown at 61, and keeps repeating itself at a high rate during the time that the system is in operation.

It will thus be seen from the foregoing description that the improved noise suppression systems described herein remove the residual noise level in signals without affecting the presentation of the data in the signals. Moreover, such noise suppression systems rapidly compensate for changes in residual noise levels, or noise floors, and thus are particularly effective for use in devices that are utilised to aid hearing impaired and deaf persons to hear.

The output signal from the system for suppressing residual noise has been referenced generally in the specification as a positive signal and a monitoring and correction arrangement has been described by which the output signal is maintained positive.

Embodiments of the invention are envisaged where the frame of reference is inverted whereby the output signal is negative with respect to a reference and a corresponding correction arrangement is utilised to maintain the output signal negative with respect to the reference.

## Claims

1. A system for suppressing residual noise in the processing of an input signal representing the energy of two signal components being a slowly varying residual noise level component and a rapidly varying data component, characterised in that said system comprises:-
first means including a circuit having input (11;30a) and output portions (16;35) for respectively receiving said input signal and outputting said data component thereof;
second means (12, 13, 14; 33) coupled to said input portion (11) of said first means for adding to said input signal a slowly varying negative/positive signal to substantially eliminate said residual noise level component from said input signal and provide an output signal corresponding essentially to the energy of said rapidly varying data component of said input signal;
third means (18,32) for sensing said output signal; and
fourth means (20,34) responsive to the sensing of a negative/positive value in said output signal for rapidly adding a positive/negative signal to the input signal being processed in order to prevent said output signal from going further negative/positive.

2. A residual noise suppression system according to claim 1, wherein said input signal comprises a rectified audio signal, which audio signal has a low frequency noise component.

3. A residual noise suppression system according to claim 2, wherein said second means comprises a resistor (33) connected between said input portion and ground.

4. A residual noise suppression system according to claim 2, wherein said second means comprises a current source (13), a capacitor (14) connected in series therewith, and a subtraction device (12) having one of its inputs connected to said input portion of said circuit and another of its inputs connected to a point intermediate said current source and said capacitor.

5. A residual noise suppression system according claim 2, wherein said third means comprises an operational amplifier (18) having a first input thereof connected to ground and a second input thereof connected to receive said output signal.

6. A residual noise suppression system according to claim 2, wherein said third means comprises a comparator (32) having one of its inputs connected to the output portion of said circuit and another of its inputs connected to ground.

7. A residual noise suppression system according to claim 2, wherein said fourth means comprises a diode (34) connected between said third means and said output portion of said first means.

8. A residual noise suppression system according to claim 2, wherein said fourth means comprises a gate means (20) responsive to said third means and connected in parallel with said second means for selectively rapidly decreasing any negative/positive DC output signal sensed by said third means.

9. A residual noise suppression system according to claim 1, wherein said data component thereof comprises auditory intelligence and wherein said input signal comprises a rectified audio signal.

10. A method of suppressing residual noise in the processing of an input signal representing the energy of two signal components being a slowly varying residual noise level component and a rapidly varying data component, comprising the steps of:
adding to said input signal a slowly varying negative/positive signal to substantially eliminate said residual noise level component from said input signal and provide an output signal corresponding essentially to the energy of the rapidly varying data component of said input signal;
sensing said output signal; and
adding a rapidly varying positive/negative signal to the signal being processed, when a negative/positive output signal is sensed, in order to prevent said output signal from going further negative/positive.

11. A method of suppressing residual noise according to claim 10, wherein said rapidly varying positive/negative signal is added to the signal being processed by selectively rapidly decreasing the level of the varying negative/positive signal that is being added to the input signal.

## Patentansprüche

1. System zum Unterdrücken von Restrauschen bei der Verarbeitung eines Eingangssignals, das die Energie von zwei Signalkomponenten repräsentiert, bei denen es sich um eine sich langsam ändernde Restrauschen-Pegelkomponente und eine sich rasch ändernde Datenkomponente handelt,
dadurch gekennzeichnet,
daß das System folgendes aufweist:
- eine erste Einrichtung, die eine Schaltung mit einem Eingangsbereich (11; 30a) und mit einem Ausgangsbereich (16; 35) aufweist, um das jeweilige Eingangssignal zu empfangen und deren Datenkomponente auszugeben;
- eine zweite Einrichtung (12, 13, 14; 33), die an den Eingangsbereich (11) der ersten Einrichtung angeschlossen ist, um dem Eingangssignal ein sich langsam änderndes negatives/positives Signal hinzuzufügen, um die Restrauschen-Pegelkomponente im wesentlichen aus dem Eingangssignal zu entfernen und ein Ausgangssignal zu liefern, das im wesentlichen der Energie der sich rasch ändernden Datenkomponente des Eingangssignals entspricht;
- eine dritte Einrichtung (18, 32), um das Ausgangssignal abzutasten; und
- eine vierte Einrichtung (20, 34), die auf die Abtastung eines negativen/positiven Wertes in dem Ausgangssignal anspricht, um rasch ein positives/negatives Signal dem gerade verarbeiteten Eingangssignal hinzuzufügen, um zu verhindern, daß das Ausgangssignal weiter negativ/positiv wird.

2. Restrauschen-Unterdrückungssystem nach Anspruch 1, wobei das Eingangssignal ein gleichgerichtetes Audiosignal enthält, wobei das Audiosignal eine Rauschkomponente mit niedriger Frequenz besitzt.

3. Restrauschen-Unterdrückungssystem nach Anspruch 2, wobei die zweite Einrichtung einen Widerstand (33) aufweist, der zwischen den Eingangsbereich und Masse geschaltet ist.

4. Restrauschen-Unterdrückungssystem nach Anspruch 2, wobei die zweite Einrichtung eine Stromquelle (13), einen damit in Reihe geschalteten Kondensator (14) sowie eine Subtraktionseinrichtung (12) aufweist, die mit dem einen ihrer Eingänge an den Eingangsbereich der Schaltung angeschlossen ist und die mit dem anderen ihrer Eingänge an eine Stelle zwischen der Stromquelle und dem Kondensator angeschlossen ist.

5. Restrauschen-Unterdrückungssystem nach Anspruch 2, wobei die dritte Einrichtung einen Operationsverstärker (18) aufweist, der mit seinem ersten Eingang mit Masse verbunden ist und mit seinem zweiten Eingang so angeschlossen ist, daß er das Ausgangssignal empfängt.

6. Restrauschen-Unterdrückungssystem nach Anspruch 2, wobei die dritte Einrichtung einen Komparator (32) aufweist, der mit dem einen seiner Eingänge mit dem Ausgangsbereich der Schaltung verbunden ist und der mit einem anderen seiner Eingänge mit Masse verbunden ist.

7. Restrauschen-Unterdrückungssystem nach Anspruch 2, wobei die vierte Einrichtung eine Diode (34) aufweist, die zwischen die dritte Einrichtung und den Ausgangsbereich der ersten Einrichtung geschaltet ist.

8. Restrauschen-Unterdrückungssystem nach Anspruch 2, wobei die vierte Einrichtung eine Gate-Einrichtung (20) aufweist, die auf die dritte Einrichtung anspricht und parallel mit der zweiten Einrichtung geschaltet ist, um selektiv rasch jedes negative/positive Gleichspannungs-Ausgangssignal zu verringern, das von der dritten Einrichtung abgetastet wird.

9. Restrauschen-Unterdrückungssystem nach Anspruch 1, wobei seine Datenkomponente akustische Informationen aufweist und wobei das Eingangssignal ein gleichgerichtetes Audiosignal aufweist.

10. Verfahren zum Unterdrücken von Restrauschen bei der Verarbeitung eines Eingangssignals, das die Energie von zwei Signalkomponenten repräsentiert, bei denen es sich um eine sich langsam ändernde Restrauschen-Pegelkomponente und eine sich rasch ändernde Datenkomponente handelt, welches die folgenden Schritte umfaßt:
- dem Eingangssignal wird ein sich langsam änderndes negatives/positives Signal hinzugefügt, um die Restrauschen-Pegelkomponente im wesentlichen aus dem Eingangssignal zu entfernen und ein Ausgangssignal zu liefern, das im wesentlichen der Energie der sich rasch ändernden Datenkomponente des Eingangssignals entspricht;
- das Ausgangssignal wird abgetastet; und
- ein sich rasch änderndes positives/negatives Signal wird dem gerade in Verarbeitung befindlichen Signal hinzugefügt, wenn ein negatives/positives Ausgangssignal abgetastet wird, um zu verhindern, daß das Ausgangssignal weiter negativ/positiv wird.

11. Verfahren zum Unterdrücken von Restrauschen nach Anspruch 10,
wobei das sich rasch ändernde positive/negative Signal dem gerade in Verarbeitung befindlichen Signal hinzugefügt wird, indem man selektiv rasch den Pegel des sich ändernden negativen/positiven Signals verringert, das gerade dem Eingangssignal hinzugefügt wird.

## Revendications

1. Un système de suppression de bruit résiduel dans le traitement d'un signal d'entrée représentant l'énergie de deux composantes de signal, l'une étant une composante de niveau de bruit résiduel lentement variable et une composante de données rapidement variable, système caractérisé en ce qu'il comprend :
un premier moyen incluant un circuit possédant des parties d'entrée (11;30a) et de sortie (16;35) pour respectivement recevoir ledit signal d'entrée et émettre ladite composante de données de celui-ci;
un second moyen (12, 13, 14 ; 33) couplé à ladite partie d'entrée (11) dudit premier moyen, pour additionner audit signal d'entrée un signal négatif/positif lentement variable pour éliminer substantiellement ladite composante de niveau de bruit résiduel dudit signal d'entrée et pour fournir un signal de sortie correspondant essentiellement à l'énergie de ladite composante de données rapidement variable dudit signal d'entrée;
un troisième moyen (18,32) pour détecter ledit signal de sortie ; et
un quatrième moyen (20, 34) répondant à la détection d'une valeur négative/positive dans ledit signal de sortie pour additionner rapidement un signal positif/négatif au signal d'entré en cours de traitement de manière à éviter audit signal d'entrée de devenir encore plus négatif/positif.

2. Un système de suppression de bruit résiduel selon la revendication 1, dans lequel ledit signal d'entrée comprend un signal sonore redressé, lequel signal sonore possède une composante de bruit à basse fréquence

3. Un système de suppression de bruit résiduel selon la revendication 2, dans lequel ledit second moyen comprend une résistance (33) connectée entre ladite partie d'entrée et la terre.

4. Un système de suppression de bruit résiduel selon la revendication 2, dans lequel ledit second moyen comprend un générateur de courant (13), un condensateur (14) connecté en série avec lui, et un dispositif de soustraction (12) possèdant l'une de ses entrées connectée à ladite partie d'entrée dudit circuit et une autre de ses entrées connectée à un point intermédiaire entre ledit générateur de courant et ledit condensateur.

5. Un système de suppression de bruit résiduel selon la revendication 2, dans lequel ledit troisième moyen comprend un amplificateur opérationnel (18) possèdant une première entrée connectée à la terre et une seconde entrée connectée pour recevoir ledit signal d'entrée.

6. Un système de suppression de bruit résiduel selon la revendication 2, dans lequel ledit troisième moyen comprend un comparateur (32) ayant l'une de ses entrées connectée à la partie sortie dudit circuit et l'autre de ses entrées connectée à la terre.

7. Un système de suppression de bruit résiduel selon la revendication 2, dans lequel ledit quatrième moyen comprend une diode (34) connectée entre ledit troisième moyen et ladite partie de sortie dudit premier moyen.

8. Un système de suppression de bruit résiduel selon la revendication 2, dans lequel ledit quatrième moyen comprend un moyen formant porte (20) sensible audit troisième moyen et connecté en parallèle avec ledit second moyen pour diminuer sélectivement et rapidement tout signal de sortie continu (DC) négatif/positif détecté par ledit troisième moyen.

9. Un système de suppression de bruit résiduel selon la revendication 1, dans lequel ladite composante de données comprend une partie sonore intelligible, et dans lequel ledit signal d'entrée comprend un signal sonore redressé.

10. Une méthode de suppression de bruit résiduel dans le traitement d'un signal d'entrée représentant l'énergie de deux composantes de signal, l'une étant une composante de bruit résiduel lentement variable et l'autre une composante de données rapidement variable, comprenant les étapes de :
addition audit signal d'entrée d'un signal négatif/positif lentement variable pour éliminer de façon substantielle ladite composante de niveau de bruit résiduel du signal d'entrée, et fournir un signal de sortie correspondant essentiellement à l'énergie de la composante de données rapidement variable dudit signal d'entrée;
détection dudit signal de sortie ; et
addition d'un signal positif/négatif rapidement variable au signal en cours de traitement, lorsqu'un signal de sortie négatif/positif est détecté, de manière à éviter que ledit signal de sortie ne devienne encore plus négatif/positif.

11. Une méthode de suppression de bruit résiduel selon la revendication 10, dans laquelle ledit signal positif/négatif rapidement variable est additionné au signal en cours de traitement en diminuant sélectivement rapidement le niveau du signal négatif/positif variable qui est en train d'être ajouté au signal d'entrée.
